# EUROPEAN PATENT SPECIFICATION

(11) **EP 3 082 393 B1**
(45) Date of publication and mention of the grant of the patent: **11.04.2018**
(21) Application number: 14871061.9
(22) Date of filing: 18.12.2014
(51) Int. Cl.: A01C 7/10, A01C 7/04

(54) **METHOD OF CONTROLLING A SINGULATOR IN AN AGRICULTURAL IMPLEMENT AND AGRICULTURAL IMPLEMENT COMPRISING SUCH SINGULATOR**
VERFAHREN ZUR STEUERUNG EINES VEREINZELERS IN EINEM LANDWIRTSCHAFTLICHEN ANBAUGERÄT UND LANDWIRTSCHAFTLICHES ANBAUGERÄT MIT SOLCH EINEM VEREINZELER
PROCÉDÉ DE COMMANDE D'UN SÉPARATEUR DANS UN INSTRUMENT AGRICOLE ET INSTRUMENT AGRICOLE COMPRENANT LEDIT SÉPARATEUR

(30) Priority: 20.12.2013 SE 1351561
(43) Date of publication of application: 26.10.2016
(73) Proprietor: Väderstad Holding AB, 590 21 Väderstad (SE)
(72) Inventor: FRANSSON, Jörgen, 590 21 Väderstad (SE); STARK, Crister, 590 21 Väderstad (SE)
(74) Representative: Awapatent AB
(86) International application number: PCT/SE2014/051537
(87) International publication number: WO 2015/094108

(56) References cited:
- EP-A1- 2 517 545
- EP-A1- 2 517 545
- WO-A1-99/14999
- WO-A1-2008/135772
- WO-A1-2011/053286
- WO-A1-2011/119095
- SE-A1- 1 150 577
- US-A1- 2011 098 851

## Description

### Technical field

The present document relates to a method of controlling a singulator in an agricultural implement, for singulating granules such as seed, fertilizer or herbicide.

### Background

When sowing with the aid of a sowing machine, it is desirable to achieve optimal distribution of seed: available acreage must be utilized as much as possible, but the crop must not be planted too densely, since the yield can then be adversely affected.

In a commonly found type of sowing machines, distribution of seed takes place in a distributor connected to a seed box. The distributor can either be connected directly to the lower portion of the seed box or via a pipe which leads to a distributor head, wherein the distributed seed, with the aid of an air current, is led in pipes or tubes to a respective furrow opener.

This type of distributor is generally set to feed out a certain quantity (expressed in weight) of granules per unit of area. It has been found that when the granules are distributed with known distributors, a distribution which is acceptable, given the cost and complexity of the equipment which is used, is achieved.

It is nevertheless desirable to further improve the precision in the feeding of seed and other granular material, such that the distribution of seed is as near optimal as possible, i. e. a correct quantity of seed per unit of area and an even distribution of the seed over the seeded area. This in order that optimization of the quantity of seed per unit of area increases the potential of each plant to produce high yield as a result of it obtaining optimal access to water, space, light and nutrient.

Ways of achieving such improvement in precision are shown in SE520798C2 and SE524649C2. There nevertheless remains a need for a device which has the capability to improve the precision in the feeding of seed, which device is robust, flexible and not too expensive to produce. In addition, it would be desirable if the achieved device can be easily integrated with existing machine designs and ideally can also be retrofitted to older machines.

Seeding machines according to the state of the art are known from EP 2 517 545 A1 and WO 99/14999.

### Summary

An object is thus to provide a method of controlling a singulator, which method can be utilized to improve the precision in sowing or distribution of granular material.

The invention is defined by the appended independent patent claims and embodiments emerge from the dependent patent claims, the following description and the appended drawings.

According to a first aspect, a method of controlling a feed device in an agricultural implement, for feeding granules from a primary distributor to at least two singulators, each comprising a granule buffer space and a granule outlet, is provided. The method comprises receiving a granule feed-out rate target value, controlling a granule feed-out rate of the primary distributor on the basis of the granule feed-out rate target value, and individually controlling a granule feed-out rate of each of the singulators on the basis of the granule feed-out rate target value.

A primary distributor can be integrated with a central granule container. Alternatively, the primary distributor can be arranged to receive a granule feed from the granule container and to distribute this to two or more singulators.

By "controlling... on the basis of" is meant that control is realized wholly or partially on the basis of this parameter, wherein it is not precluded that further parameters affect the control.

By "individually controlling" is meant controlling an individual singulator or controlling a group of singulators, in which the group comprises a part-quantity of all the singulators found in the agricultural implement.

The number of singulators can be 6-8 per meter of width, i.e. in practice between 18 and 100 for a sowing machine.

With a method as described above, it is possible, with a comparatively simple singulator design, to achieve a substantially more even granule density than with conventional feed devices in which the granule feed-out rate of the agricultural implement is controlled centrally through control of a primary distributor.

The method is especially applicable in sowing machines (or other granule-feeding machines) having so-called "quantity feed-out" or "volumetric feed-out", in which the singulator will constitute the only component which intentionally affects the granule flow between the primary distributor and the outlet for the granules to the ground (which is often constituted by a furrow opener or equivalent). The method is preferably applied in sowing machines having a pneumatic feed, but it is also possible to utilize it in sowing machines having a mechanical feed. The volumetric feed can be carried out continuously during ongoing travel, i.e. not only in connection with interruption of the feed-out from the singulator.

The method can further comprise receiving a desired granule density, receiving a travel speed of the agricultural implement, receiving a singulator-specific parameter, and calculating the granule feed-out rate target value on the basis of the desired granule density, the travel speed and the singulator-specific parameter.

The desired granule density can be received in the form of granules (expressed as number, volume or weight) per unit of area or per unit of length, wherein conversion to the relevant value can be carried out. The input can be a user input, which is obtained by inputting of a numerical value or by selection in a menu.

The travel speed can be measured in a manner which is known per se, either via the speedometer of a towing vehicle or via a speed sensor disposed on the agricultural implement. The speedometer can have the form, for example, of a conventional speedometer, which measures via the rolling of the wheels against the ground, a GPS-based speedometer, or a radar-based speedometer.

The singulator-specific parameter can be a hole density or a total number of holes of a singulator disk; it can represent a finger length, wing length or bucket capacity, or some other factor which is constant during use of the singulator and which affects a relationship between a dynamic factor, such as a rotation speed or the like, and the granule feed-out rate of the singulator.

The method can further comprise receiving a measured resultant granule feed-out rate, receiving a travel speed of the agricultural implement, calculating a resultant granule density on the basis of the resultant granule feed-out rate and the travel speed, and controlling at least one of the granule feed-out rate of the primary distributor and the granule feed-out rate of the singulators also on the basis of the resultant granule density.

Specifically, the method can comprise receiving a value corresponding to a measured resultant granule density and controlling the feed-out rate of the primary distributor on the basis of the value corresponding to the measured resultant granule density.

Such a value corresponding to resultant granule density can be a granule feed-out rate, which can be derived on the basis of input data from a granule counter which counts granules issuing from the singulator.

A measured granule feed-out rate can be achieved by counting the number of granules issuing from the singulator over a given unit of time.

A resultant granule density can be calculated on the basis of the quantity of outgoing granules from a respective singulator, the travel speed of the agricultural implement and, optionally, also the distance in the lateral direction between the rows. The resultant granule density can be compared with the desired granule density. If the resultant granule density is too high, the feed-out rate of the singulator and/or of the primary distributor can be reduced. If the resultant granule density is too low, the feed-out rate of the singulator and/or of the primary distributor can be increased. If the resultant granule density is too high or low, viewed over the whole of the width which is served by the primary distributor, it is advantageous to regulate the feed-out rate of the primary distributor on the basis of the resultant granule density. The method can further comprise measuring a granule level in the granule buffer space, receiving a granule level target value, and controlling at least one of the granule feed-out rate of the primary distributor and the granule feed-out rate of the singulators also on the basis of the granule level and the granule level target value.

Specifically, the method can comprise receiving a measured granule level in the granule buffer space and controlling the singulator on the basis of the measured granule level. Even though this means that the resultant granule density from the individual singulator increases or decreases compared with other singulators, an even distribution of granules for the row produced by the singulator is still achieved.

The granule level can be measured with the aid of an arbitrary measuring device for measuring a level of granular material.

The granule level target value can be a factory-set value, or a value which is determined on the basis of the type of granules which are to be fed.

For example, the granule feed-out rate of the singulator can be increased or decreased if the granule level exceeds or falls below the granule level target value, possibly with account having been taken of tolerances in this. Alternatively, or additionally, the granule feed-out rate of the primary distributor can be decreased or increased if the granule level exceeds or falls below the granule level target value. If the primary distributor is controlled in this way, account can be taken of many or all of the singulators supplied by the primary distributor. For example, an alteration of the granule feed-out rate of the primary distributor can be adjusted on the basis of a mean value and/or maximum value and/or minimum value of the granule levels of a plurality of singulators.

In the method, granules fed out from the primary distributor can be distributed substantially evenly between said at least two singulators. The distribution between the singulators can be substantially fixed, i.e. non-regulatable. By substantially evenly is meant +/- 15 %, preferably +/- 10 % or +/- 5 % between the rows which are active (i.e. not shut off). The objective is nevertheless always to have as little deviation as possible.

In the method, the singulator can comprise a rotatable or oscillating singulating apparatus, and wherein the granule feed-out rate of each singulator is controlled with the aid of a rotation speed or oscillation frequency.

The singulating apparatus can comprise a singulating disk, which has holes or recesses in which granules can be received in the buffer space and be conveyed from the buffer space to the granule outlet.

According to a second aspect, an agricultural implement for feeding out granules, such as seed, fertilizer and/or herbicide, is provided. The agricultural implement comprises a granule container and a primary distributor, which latter is arranged to feed granules from the granule container to at least two singulators, each comprising a granule buffer space and a granule outlet. The singulators are arranged to receive said granules from the granule container and to feed out granules to a respective furrow opener. A control unit is arranged to control a respective feed-out rate of the primary distributor and the singulators such that the feed-out rate of the primary distributor and the singulators achieves a respective granule feed-out rate target value. Specifically, the control unit can be arranged to control a respective feed-out rate on the basis of a granule feed-out rate target value received in the control unit (400). The feed-out of the granules from the singulators can be such that a flow of granules per unit of time fluctuates less than flow coming into the singulator, which means that a more even granule feed-out rate is achieved.

The agricultural implement can further comprise members for receiving a desired granule density, members for receiving a travel speed of the agricultural implement, and members for receiving a singulator-specific parameter. The control unit can be arranged to calculate the granule feed-out rate target value on the basis of the desired granule density, the travel speed and the singulator-specific parameter. Members for receiving values representing different variables can be provided in the control unit.

The agricultural implement can further comprise members for receiving a measured resultant granule feed-out rate, and members for receiving a travel speed of the agricultural implement. The control unit can be arranged to calculate a resultant granule density on the basis of the resultant granule feed-out rate and the travel speed, and the control unit can be arranged to control at least one of the granule feed-out rate of the primary distributor and the granule feed-out rate of the singulators also on the basis of the resultant granule density.

The agricultural implement can further comprise members for measuring a granule level in the granule buffer space, and members for receiving a granule level target value. The control unit can be arranged to control at least one of the granule feed-out rate of the primary distributor and the granule feed-out rate of the singulators also on the basis of the granule level and the granule level target value.

The agricultural implement can have the form of a sowing machine, a fertilizer spreader or a herbicide spreader, or a combination thereof.

In the agricultural implement, the primary distributor can be arranged to achieve volumetric feeding of the granules to the singulator.

### Brief description of the drawings

Fig. 1 a shows a sowing machine, which can be supplemented with a singulator as represented herein in order to achieve improved feed-out precision.
Fig. 1b shows a sowing machine comprising singulators as represented herein.
Fig. 2 shows a sectional view of a singulator 1 provided with a grain counter 12.
Fig. 3 shows a sectional view of a singulator 1 provided with a first variant of a seed level meter 300.
Fig. 4 shows a sectional view of a singulator 1 provided with a second variant of a seed level meter 310.
Fig. 5 shows a sectional view of a singulator 1 provided with a third variant of a seed level meter 320.
Fig. 6 shows a schematic view of a granule feed system for an agricultural implement.

### Detailed description

The structure and working of a singulator 1 will be described below with reference to a singulator 1 for singulating seed, such as wheat, rye, rape, peas, etc. It will be appreciated that the singulator 1 can analogously be utilized in devices for feeding out, for example, fertilizer and/or herbicide.

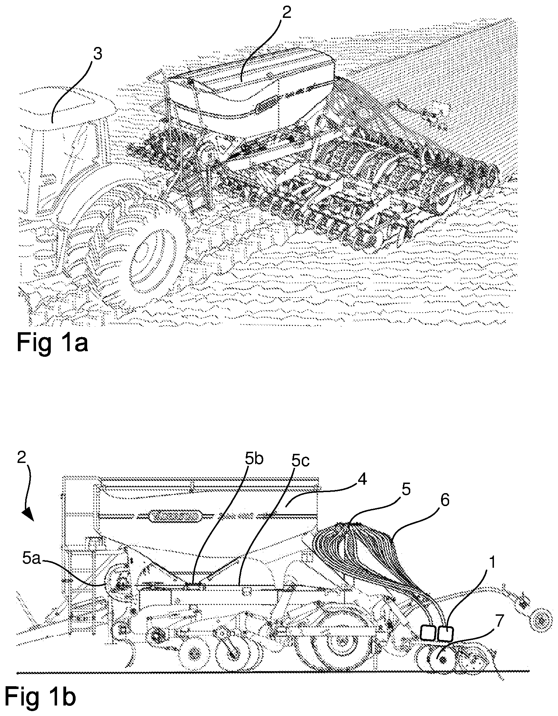

Fig. 1a shows an agricultural implement 2 in the form of a sowing machine, which is configured to be pulled behind a towing vehicle 3, such as a tractor. The agricultural implement 2 comprises a seed box 4, i.e. a container for seed, a primary distributor 5, i.e. a device for distributing seed from the container to a plurality of furrow openers 7, a plurality of tubes 6 for leading a seed-laden air flow from the primary distributor 5 to a respective furrow opener 7. The terms "furrow opener" and "share" here include both traditional furrow openers and wheel-based or disk-based devices for placing granules in the ground. It is not necessary to utilize a furrow opener. Feed-out can instead be realized directly to the ground.

Fig. 1b shows an agricultural implement 2' having a singulator 1 disposed between the primary distributor 5 and a respective furrow opener 7. The agricultural implement 2' shown in fig. 1b has a fan 5a, which produces an air flow to which seed is fed from the seed box 4 by a feeder 5b and is thereafter transported to the primary distributor 5 via a pipe 5c.

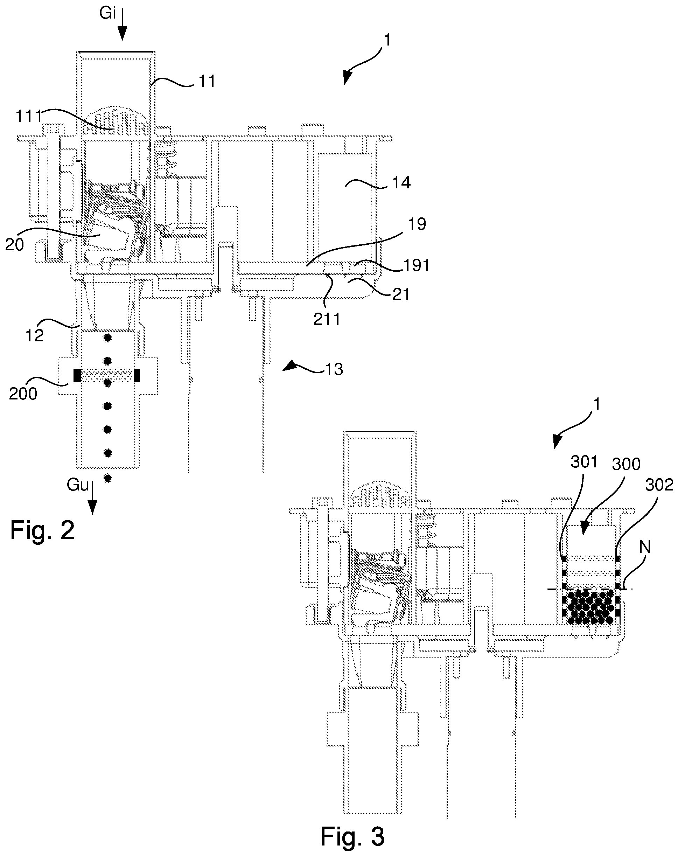

Fig. 2 shows a singulator 1, which has an inlet 11, a buffer space 14, and a singulating disk 19 which is rotatable in the buffer space and has a plurality of through holes 191, which can be disposed along the circumferential direction of the singulating disk. The singulating disk 19 can be made to rotate with the aid of a motor 13, for example an electric motor. The size and shape of the holes 191 is chosen such that a single granule of the type which is to be fed can be received in each hole. The buffer space 14 has a bottom 21, and the singulating disk 19 is arranged to rotate so close to the bottom 21 that the bottom 21 forms the bottom of the through holes 191 of the singulating disk. The bottom 21 can be provided with a plurality of slits 211, which are configured to let through air. The bottom 21 further has an opening aligned with an outlet 12 from the buffer space. A granule ejector 20 can be disposed at the opening.

The singulator can work as follows. At the inlet 11, a granule-laden air flow Gi is received. The granules are led via a separator grate 111 into the buffer space 14. In the buffer space, the singulating disk 19 is made to rotate about an axis, which in the figures is vertical, wherein granules drop down into the holes 191, rest against the bottom 21 and follow the rotational motion of the singulating disk. When the granules reach the opening at the outlet 12, they fall through the holes 191 and down into the outlet 12. A screen prevents granules which have not been received in any hole from reaching the opening.

Optionally, the granule ejector 20 can be arranged to produce a compressive force upon the granules such that these leave the holes 191 in the direction of the outlet 12, whereupon the holes can be cleared.

Once in the outlet, the granules can either be allowed to fall freely, or they can be drawn with an air current which can be produced by virtue of the air flow which feeds the granules to the singulators 1 being gathered in a space beneath the bottom 21 and being led to the outlet 12.

It will be appreciated that the quantity of fed-out granules per unit of time will be dependent on the number of holes 191 with which the singulating disk 19 is provided, and the speed at which this is made to rotate.

It is thus possible to partially control a granule feed-out rate by switching between different singulating disks which have a different number of holes per unit of angle. In addition, it is possible to control the granule feed-out rate by controlling the rotation speed of the singulating disk.

Given that a certain singulating disk 19 has been chosen and installed in the singulator 1, a granule level N (fig. 3) in the buffer space 14 can be controlled, either by controlling the rotation speed of the singulating disk 19 or by controlling a feed rate from the primary distributor 5.

The feed rate of the primary distributor 5 is controlled, normally centrally, which means that all the outlets from the primary distributor 5 are affected in equal measure when the feed-out rate of the primary distributor is modified. It is customary for the feed-out rate to vary between 5 and 15 % between different outlets from a primary distributor 5. The primary distributor 5 thus does not allow individual control of feed rate to individual shares.

The function of the singulator 1 is to even out the granule flow to each respective share.

In order to be able to achieve this, a counter 200 (fig. 2) for outbound granules is disposed at the outlet 12. The counter 200 can comprise an optical counter, which counts the number of granules passing a certain point in the outlet. The counter can be configured according to, for example, the principles shown in US 6158363.

In addition, a level meter 300, 310, 320 (figs. 3, 4, 5) can be disposed in the buffer space 14 for measuring a granule level in the buffer space 14.

In the embodiment shown in fig. 3, the level meter 300 comprises a plurality of transmitters 301, such as light, ultrasound or microwave sources, which are placed at different vertical level, and a plurality of receivers 302, which are also placed at different vertical level. The transmitters can generate light of same wavelengths, wherein the number of sensors which detect light falling below a certain level is indicative of the granule level N. The transmitters 301 can be directed (i.e. generate light beams) toward a respective receiver 302. Alternatively, the transmitters 301 can generate light of different wavelengths, wherein the receivers 302 are sensitive to a respective wavelength.

The level meter 300 shown in fig. 3 can be combined with the counter 200 shown in fig. 2.

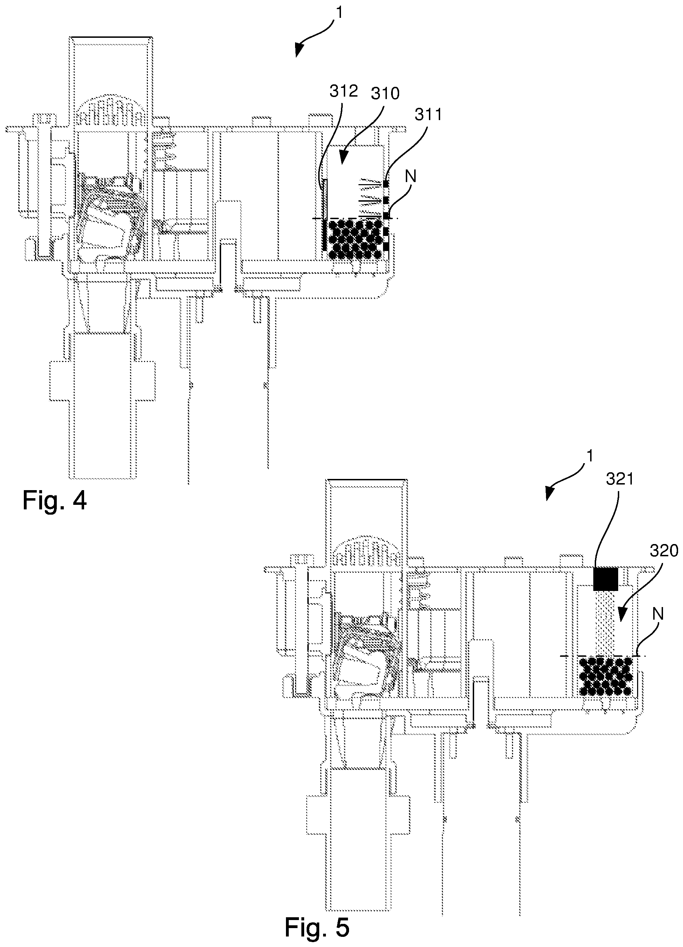

In fig. 4 is shown a variant of a level meter 310 in which one or more light sources 311 generate(s) light in the buffer space 14, and in which a light sensor 312 detects a received quantity of light, which light can be utilized to derive the granule level N.

The level meter 310 shown in fig. 4 can be combined with the counter 200 shown in fig. 2.

In fig. 5 is shown a variant of a level meter 320, in which a light or sound source 321 is arranged to transmit a light or sound signal in the direction of the "surface" of the granules, and a sensor, which can, but does not have to be integrated with the source 321, calculates the time it takes for the signal to get back to the sensors, whereupon the granule level N can be derived.

The level meter 320 shown in fig. 5 can be combined with the counter 200 shown in fig. 2.

It will be appreciated that other types of level sensors can be utilized, such as mechanical sensors (of vibrating point type, rotating paddles, or admittance type), capacitive sensors, microwave sensors, weight sensors or the like.

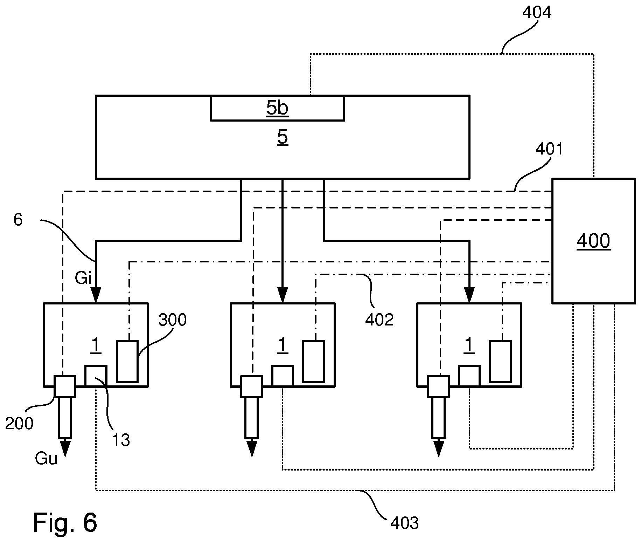

Fig. 6 shows a feed system comprising a primary distributor 5, granule feed lines 6 and singulators 1. In addition, a control unit 400 is arranged to produce a control signal 403 for controlling the feed-out rate of the singulator 1 (i.e. controlling the rotation speed of the singulating disk 19), and a control signal 404 for controlling the feed-out rate of the primary distributor 5. The feed-out rate of the primary distributor can in turn be controlled by control of a feeder 5b, which feeds granules to (or from) the primary distributor 5.

In addition, the control unit 400 is arranged to receive sensor signals 401 from a respective granule counter 200 and to receive sensor signals 402 from a respective level meter 300, 310, 320.

The control unit 400 can be a single integrated unit, or two or more distributed parts which interact. The parts can be disposed on the agricultural implement and/or in the towing vehicle.

The control unit 400 can further comprise a user interface (not shown) and a data memory (not shown).

The system in fig. 6 can work as follows, in which a sowing machine can act as an example.

Prior to sowing a specific type of seed, a suitable singulating disk 19 is chosen and installed in a respective singulator, i.e. normally one singulating disk per furrow opener.

Via the user interface, a particular type of crop and the desired sowing density is chosen. Information on a singulating disk 19 can possibly be inputted, for example if there are different singulating disks for the same type of crop. Otherwise, the characteristics of the singulating disk 19 can be derived on the basis of the chosen type of crop.

While sowing is in progress, the travel speed of the agricultural implement is measured, wherein a target value for the granule feed-out rate of the primary distributor is calculated on the basis of the travel speed and the desired sowing density. A target value for the granule feed-out rate of a respective singulator is also calculated on the basis of the travel speed and the desired sowing density. This target value can also contain a singulator-specific component, which is based on the hole density of the singulating disk 19.

In order to ensure that the desired sowing density is attained, seed grain issuing from the singulators 1 is counted, wherein a resultant seed density is calculated on the basis of this value and the current travel speed. It will be appreciated that the resultant sowing density can be calculated as a mean value, a rolling average value or instantaneously.

If the resultant sowing density differs from the desired sowing density, the feed-out rate of the singulator and/or of the primary distributor can be adjusted upward or downward in order that the desired sowing density shall be attained.

In order to ensure a correct level in the singulator 1, the seed level N can be measured in the buffer space 14. The measurement can be taken continuously or at predefined intervals. The acquired value of the seed level N can be compared with a target value for the seed level. This target value can be determined on the basis of empirical data and be chosen such that a sufficient margin upward and/or downward is achieved in order that variations in the feed rate of the primary distributor shall be able to be compensated for.

If the measured seed level N differs from the desired seed level, the feed-out rate of the singulator and/or of the primary distributor can be adjusted upward or downward in order that the desired seed level shall be attained. The feed-out rate of the singulator 1 can be regulated continuously or step by step. For example, the feed-out rate can be altered by a predefined value or by a value which is proportional to the deviation between the acquired value and the target value for the seed level. In the case of alteration by a predefined value, regulation can occur step by step, whereupon a newly acquired value of the granule level is acquired between each successive alteration.

For example, adjustment of the feed-out rate of the primary distributor 5 can be carried out in order to compensate for deviations between resultant and desired sowing density, wherein adjustment of the feed-out rate of the singulator 1 is carried out in order to compensate for deviations between desired and actual seed level.

The feed-out rate of the primary distributor can also be altered step by step or proportionally to the deviation between the acquired value and the target value for the sowing density. In the case of step-by-step regulation, the resultant sowing density can be measured between regulating steps. Alternatively the alteration can be made directly, by the feed-out rate of the primary distributor being altered as much as is required to compensate for the deviation.

Sensor values can be collected interface and stored in a data memory in a manner which is known per se. Calculations can be conducted in the control unit 400, which can comprise one or more application-specific electronic circuits. Sensors can communicate with the control unit 400 wirelessly or by wired connection.

Alternatively, or additionally, data storage and data processing can be realized wholly or partially with the aid of software in an ordinary data processing device, such as a mobile computer, a tablet or a smartphone, which can also act as a user interface for the inputting of control data (sowing density, type of singulator disk, etc.) and for feedback to the user, in real time and/or for subsequent follow-up.

## Claims

1. A method of controlling a feed device in an agricultural implement, for feeding granules from a primary distributor (5) to at least two singulators (1), each comprising a granule buffer space (14) and a granule outlet (12), wherein the method comprises:
receiving a granule feed-out rate target value,
controlling a granule feed-out rate of the primary distributor (5) on the basis of the granule feed-out rate target value, and
individually controlling a granule feed-out rate of each of the singulators (1) on the basis of the granule feed-out rate target value.

2. The method as claimed in claim 1, further comprising:
receiving a desired granule density,
receiving a travel speed of the agricultural implement,
receiving a singulator-specific parameter, and
calculating the granule feed-out rate target value on the basis of the desired granule density, the travel speed and the singulator-specific parameter.

3. The method as claimed in claim 2, further comprising:
receiving a measured resultant granule feed-out rate,
receiving a travel speed of the agricultural implement,
calculating a resultant granule density on the basis of the resultant granule feed-out rate and the travel speed, and
controlling at least one of the granule feed-out rate of the primary distributor (5) and the granule feed-out rate of the singulators (1) also on the basis of the resultant granule density.

4. The method as claimed in claim 1 or 2, further comprising receiving a value corresponding to a measured resultant granule density and controlling the feed-out rate of the primary distributor (5) on the basis of the value corresponding to the measured resultant granule density.

5. The method as claimed in any one of the preceding claims, further comprising
measuring a granule level in the granule buffer space,
receiving a granule level target value, and
controlling at least one of the granule feed-out rate of the primary distributor (5) and the granule feed-out rate of the singulators (1) also on the basis of the granule level and the granule level target value.

6. The method as claimed in any one of claims 1-4, further comprising receiving a measured granule level in the granule buffer space (14) and controlling the singulator (1) on the basis of the measured granule level.

7. The method as claimed in any one of the preceding claims, wherein granules fed out from the primary distributor (5) are distributed substantially evenly between said at least two singulators (1).

8. The method as claimed in any one of the preceding claims, wherein the singulator comprises a rotatable or oscillating singulating apparatus (19), and wherein the granule feed-out rate of each singulator (1) is controlled by a rotation speed or oscillation frequency.

9. An agricultural implement for feeding out granules, such as seed, fertilizer and/or herbicide, comprising:
a granule container (4),
a primary distributor (5), which is arranged to feed granules from the granule container (4) to at least two singulators (1), each comprising a granule buffer space (14) and a granule outlet (12),
wherein the singulators (1) are arranged to receive said granules from the granule container (4) and to feed out granules to a respective furrow opener,
a control unit (400), which is arranged to control a respective feed-out rate of the primary distributor (5) and the singulators (1) such that the feed-out rate of the primary distributor (5) and the singulators (1) achieves a respective granule feed-out rate target value.

10. The agricultural implement as claimed in claim 9, further comprising:
members for receiving a desired granule density,
members for receiving a travel speed of the agricultural implement, and
members for receiving a singulator-specific parameter,
wherein the control unit (400) is arranged to calculate the granule feed-out rate target value on the basis of the desired granule density, the travel speed and the singulator-specific parameter.

11. The agricultural implement as claimed in claim 9 or 10, further comprising:
members for receiving a measured resultant granule feed-out rate, and
members for receiving a travel speed of the agricultural implement,
wherein the control unit (400) is arranged to calculate a resultant granule density on the basis of the resultant granule feed-out rate and the travel speed, and
wherein the control unit (400) is arranged to control at least one of the granule feed-out rate of the primary distributor (5) and the granule feed-out rate of the singulators (1) also on the basis of the resultant granule density.

12. The agricultural implement as claimed in any one of claims 9-11, further comprising
members (300, 310, 320) for measuring a granule level in the granule buffer space, and
members for receiving a granule level target value,
wherein the control unit (400) is arranged to control at least one of the granule feed-out rate of the primary distributor and the granule feed-out rate of the singulators also on the basis of the granule level and the granule level target value.

13. The agricultural implement as claimed in any one of the preceding claims, wherein the primary distributor is arranged to achieve volumetric feeding of the granules to the singulator.

## Patentansprüche

1. Verfahren zum Steuern einer Vorschubvorrichtung in einem landwirtschaftlichen Gerät zum Vorschieben von Granulaten von einem Primärverteiler (5) zu mindestens zwei Vereinzelern (1), von denen jeder einen Granulatpufferraum (14) und einen Granulatauslass (12) umfasst, wobei das Verfahren Folgendes umfasst:
Empfangen eines Granulat-Herausschubrate-Zielwerts,
Steuern einer Granulat-Herausschubrate des Primärverteilers (5) auf der Basis des Granulat-Herausschubrate-Zielwerts und individuelles Steuern einer Granulat-Herausschubrate jedes der Vereinzeler (1) auf der Basis des Granulat-Herausschubrate-Zielwerts.

2. Verfahren nach Anspruch 1, ferner umfassend:
Empfangen einer gewünschten Granulatdichte,
Empfangen einer Bewegungsgeschwindigkeit des landwirtschaftlichen Geräts,
Empfangen eines Vereinzeler-spezifischen Parameters und
Berechnen des Granulat-Herausschubrate-Zielwerts auf der Basis der gewünschten Granulatdichte, der Bewegungsgeschwindigkeit und des Vereinzeler-spezifischen Parameters.

3. Verfahren nach Anspruch 2, ferner umfassend:
Empfangen einer gemessenen resultierenden Granulat-Herausschubrate, Empfangen einer Bewegungsgeschwindigkeit des landwirtschaftlichen Geräts,
Berechnen einer resultierenden Granulatdichte auf der Basis der resultierenden Granulat-Herausschubrate und der Bewegungsgeschwindigkeit und
Steuern mindestens einer der Granulat-Herausschubrate des Primärverteilers (5) und der Granulat-Herausschubrate der Vereinzeler (1) auch auf der Basis der resultierenden Granulatdichte.

4. Verfahren nach Anspruch 1 oder 2, ferner umfassend Empfangen eines Werts, der einer gemessenen resultierenden Granulatdichte entspricht, und
Steuern der Herausschubrate des Primärverteilers (5) auf der Basis des Werts, der der gemessenen resultierenden Granulatdichte entspricht.

5. Verfahren nach einem der vorhergehenden Ansprüche, ferner umfassend
Messen eines Granulatniveaus in dem Granulatpufferraum, Empfangen eines Granulatniveau-Zielwerts und
Steuern mindestens einer der Granulat-Herausschubrate des Primärverteilers (5) und der Granulat-Herausschubrate der Vereinzeler (1) auch auf der Basis des Granulatniveaus und des Granulatniveau-Zielwerts.

6. Verfahren nach einem der Ansprüche 1-4, ferner umfassend Empfangen eines gemessenen Granulatniveaus in dem Granulatpufferraum (14) und Steuern des Vereinzelers (1) auf der Basis des gemessenen Granulatniveaus.

7. Verfahren nach einem der vorhergehenden Ansprüche, wobei Granulate, die aus dem Primärverteiler (5) herausgeschoben werden, im Wesentlichen gleichmäßig zwischen den mindestens zwei Vereinzelern (1) verteilt werden.

8. Verfahren nach einem der vorhergehenden Ansprüche, wobei der Vereinzeler eine drehbare oder schwingende Vereinzelungseinrichtung (19) umfasst und wobei die Granulat-Herausschubrate jedes Vereinzelers (1) durch eine Drehgeschwindigkeit oder Schwingungsfrequenz gesteuert wird.

9. Landwirtschaftliches Gerät zum Herausschieben von Granulaten, wie etwa Saatgut, Dünger und/oder Herbizid, umfassend:
einen Granulatbehälter (4),
einen Primärverteiler (5), der angeordnet ist, um Granulate aus dem Granulatbehälter (4) zu mindestens zwei Vereinzelern (1) vorzuschieben, von denen jeder einen Granulatpufferraum (14) und
einen Granulatauslass (12) umfasst,
wobei die Vereinzeler (1) angeordnet sind, um die Granulate aus dem Granulatbehälter (4) zu empfangen und um Granulate zu einem jeweiligen Furchenöffner herauszuschieben,
eine Steuereinheit (400), die angeordnet ist, um eine jeweilige Herausschubrate des Primärverteilers (5) und der Vereinzeler (1) derart zu steuern, dass die Herausschubrate des Primärverteilers (5) und der Vereinzeler (1) einen jeweiligen Granulat-Herausschubrate-Zielwert erreichen.

10. Landwirtschaftliches Gerät nach Anspruch 9, ferner umfassend:
Elemente zum Empfangen einer gewünschten Granulatdichte,
Elemente zum Empfangen einer Bewegungsgeschwindigkeit des landwirtschaftlichen Geräts und
Elemente zum Empfangen eines Vereinzeler-spezifischen Parameters, wobei die Steuereinheit (400) angeordnet ist, um den Granulat-Herausschubrate-Zielwert auf der Basis der gewünschten Granulatdichte, der Bewegungsgeschwindigkeit und des Vereinzeler-spezifischen Parameters zu berechnen.

11. Landwirtschaftliches Gerät nach Anspruch 9 oder 10, ferner umfassend:
Elemente zum Empfangen einer gemessenen resultierenden Granulat-Herausschubrate und
Elemente zum Empfangen einer Bewegungsgeschwindigkeit des landwirtschaftlichen Geräts,
wobei die Steuereinheit (400) angeordnet ist, um eine resultierende Granulatdichte auf der Basis der resultierenden Granulat-Herausschubrate und der Bewegungsgeschwindigkeit zu berechnen, und
wobei die Steuereinheit (400) angeordnet ist, um mindestens eine der Granulat-Herausschubrate des Primärverteilers (5) und der Granulat-Herausschubrate der Vereinzeler (1) auch auf der Basis der resultierenden Granulatdichte zu steuern.

12. Landwirtschaftliches Gerät nach einem der Ansprüche 9-11, ferner umfassend:
Elemente (300, 310, 320) zum Messen eines Granulatniveaus in dem Granulatpufferraum und
Elemente zum Empfangen eines Granulatniveau-Zielwerts,
wobei die Steuereinheit (400) angeordnet ist, um mindestens eine der Granulat-Herausschubrate des Primärverteilers und der Granulat-Herausschubrate der Vereinzeler auch auf der Basis des Granulatniveaus und des Granulatniveau-Zielwerts zu steuern.

13. Landwirtschaftliches Gerät nach einem der vorhergehenden Ansprüche, wobei der Primärverteiler angeordnet ist, um ein volumetrisches Vorschieben der Granulate zu dem Vereinzeler zu erreichen.

## Revendications

1. Procédé de commande d'un dispositif d'alimentation dans un instrument agricole pour l'alimentation en granules en provenance d'un distributeur primaire (5) d'au moins deux séparateurs (1), chacun comprenant un espace tampon de granules (14) et une sortie de granules (12), ce procédé comprenant :
la réception d'une valeur cible de vitesse d'alimentation,
le commande d'une vitesse d'alimentation en granules du distributeur primaire (5) sur la base de la valeur cible de vitesse d'alimentation en granules, et
la commande individuelle d'une vitesse d'alimentation en granules de chacun des séparateurs (1) sur la base de la valeur cible de vitesse d'alimentation en granules.

2. Procédé selon la revendication 1, comprenant en outre :
la réception d'une densité désirée de granules,
la réception d'une vitesse de déplacement de l'instrument agricole,
la réception d'un paramètre spécifique au séparateur, et
le calcul de la valeur cible de vitesse d'alimentation en granules sur la base de la densité désirée de granules, de la vitesse de déplacement et du paramètre spécifique au séparateur.

3. Procédé selon la revendication 2, comprenant en outre :
la réception d'une vitesse mesurée résultante d'alimentation en granules,
la réception d'une vitesse de déplacement de l'instrument agricole,
le calcul d'une densité résultante de granules sur la base de la vitesse d'alimentation résultante en granules et de la vitesse de déplacement, et
la commande d'au moins une parmi la vitesse d'alimentation en granules du distributeur primaire (5) et la vitesse d'alimentation en granules des séparateurs (1) également sur la base de la densité résultante en granules.

4. Procédé selon la revendication 1 ou 2, comprenant en outre :
la réception d'une valeur correspondant à une densité mesurée résultante en granules et
la commande de la vitesse d'alimentation du distributeur primaire (5) sur la base de la valeur correspondant à la densité mesurée résultante en granules.

5. Procédé selon l'une quelconque des revendications précédentes, comprenant en outre :
la mesure d'un niveau de granules dans l'espace tampon de granules, la réception d'une valeur cible de niveau de granules, et
la commande d'au moins une parmi la vitesse d'alimentation en granules du distributeur primaire (5) et la vitesse d'alimentation en granules des séparateurs (1) également sur la base du niveau de granules et de la valeur cible de niveau de granules.

6. Procédé selon l'une quelconque des revendications 1 à 4, comprenant en outre la réception d'un niveau mesuré de granules dans l'espace tampon de granules (14) et la commande du séparateur (1) sur la base du niveau mesuré de granules.

7. Procédé selon l'une quelconque des revendications précédentes, dans lequel les granules sortis du distributeur primaire (5) sont distribués de manière sensiblement égale entre les lesdits au moins deux séparateurs (1).

8. Procédé selon l'une quelconque des revendications précédentes, dans lequel le séparateur comprend un appareil séparateur rotatif oscillant (19) et la vitesse d'alimentation en granules de chaque séparateur (1) est commandée par une vitesse de rotation ou une fréquence d'oscillation.

9. Instrument agricole pour l'alimentation en granules, comme de l'engrais et/ou de l'herbicide, comprenant :
un réservoir de granules (4),
un distributeur primaire (5) qui est conçu pour alimenter en granules en provenance du réservoir de granules (4) au moins deux séparateurs (1), chacun comprenant un espace tampon de granules (14) et une sortie de granules (12),
les séparateurs (1) étant conçus pour recevoir lesdits granules en provenance du réservoir de granules (4) et pour alimenter en granules un ouvreur de sillons respectif,
une unité de commande (400) qui est conçue pour commander une vitesse d'alimentation respective du distributeur primaire (5) et des séparateurs (1) de manière à ce que la vitesse d'alimentation du distributeur primaire (5) et des séparateurs (1) atteigne une valeur cible respective de vitesse d'alimentation en granules.

10. Instrument agricole selon la revendication 9, comprenant en outre :
des éléments pour recevoir une densité désirée de granules,
des éléments pour recevoir une vitesse de déplacement de l'instrument agricole, et
des éléments pour recevoir un paramètre spécifique au séparateur,
l'unité de commande (400) étant conçue pour calculer la valeur cible de vitesse d'alimentation en granules sur la base de la densité désirée en granules, de la vitesse de déplacement et du paramètre spécifique au séparateur.

11. Instrument agricole selon la revendication 9 ou 10, comprenant en outre :
des éléments pour recevoir une vitesse d'alimentation en granules mesurée résultante, et
des éléments pour recevoir une vitesse de déplacement de l'instrument agricole,
l'unité de commande (400) étant conçu pour calculer une densité résultante de granules sur la base de la vitesse d'alimentation résultante en granules et de la vitesse de déplacement, et
l'unité de commande (400) étant conçue pour commander au moins une parmi la vitesse d'alimentation en granules du distributeur primaire (5) et la vitesse d'alimentation en granules des séparateurs (1) également sur la base de la densité résultante en granules.

12. Instrument agricole selon l'une quelconque des revendications 9 à 11, comprenant en outre :
des éléments (300, 310, 320) pour mesurer un niveau de granules dans l'espace tampon de granules, et
des éléments pour recevoir une valeur cible de niveau de granules,
l'unité de commande (400) étant conçue pour commander au moins une parmi la vitesse d'alimentation en granules du distributeur primaire et la vitesse d'alimentation en granules des séparateurs également sur la base du niveau de granules et de la valeur cible de niveau de granules.

13. Instrument agricole selon l'une quelconque des revendications précédentes, dans lequel le distributeur primaire est conçu pour réaliser une alimentation volumétrique en granules du séparateur.
